**Europäisches Patentamt**

**European Patent Office**

**Office européen des brevets**

(19)

(11) Publication number : **0 513 307 B1**

(12) # EUROPEAN PATENT SPECIFICATION

(45) Date of publication of patent specification :
02.11.95 Bulletin 95/44

(51) Int. Cl.⁶ : **H04B 7/26, H04Q 7/30, H04J 3/16**

(21) Application number : **92900626.0**

(22) Date of filing : **29.11.91**

(86) International application number :
**PCT/FI91/00364**

(87) International publication number :
**WO 92/10885 25.06.92 Gazette 92/14**

(54) **A RADIO SYSTEM.**

(30) Priority : **04.12.90 FI 905994**

(43) Date of publication of application :
**19.11.92 Bulletin 92/47**

(45) Publication of the grant of the patent :
**02.11.95 Bulletin 95/44**

(84) Designated Contracting States :
**AT BE CH DE DK ES FR GB GR IT LI LU NL SE**

(56) References cited :
**DE-A- 3 130 176**
**US-A- 4 398 289**
**US-A- 4 686 672**
**US-A- 4 763 322**

(73) Proprietor : **NOKIA TELECOMMUNICATIONS OY**
**Mäkkylän Puistotie 1**
**FIN-02600 Espoo (FI)**

(72) Inventor : **PAAVONEN, Tapio**
**Myllytie 7 A 5**
**SF-43100 Saarijärvi (FI)**
Inventor : **TÖYRYLÄ, Hannu**
**Vaahtokuja 6 D 33**
**SF-01600 Vantaa (FI)**
Inventor : **TIURANIEMI, Riitta**
**Toinen Linja 23 A 7**
**SF-00530 Helsinki (FI)**
Inventor : **SARJA, Jorma**
**Suurlohjankatu 22/20**
**SF-08100 Lohja (FI)**
Inventor : **HARJULA, Arto**
**Uraantie 3 B**
**SF-02140 Espoo (FI)**

(74) Representative : **Tomlinson, Kerry John**
**Frank B. Dehn & Co.**
**European Patent Attorneys**
**Imperial House**
**15-19 Kingsway**
**London WC2B 6UZ (GB)**

**EP 0 513 307 B1**

## Description

The invention relates to a radio system comprising several fixed radio stations positioned apart from each other within a coverage area of the radio system, and at least one mobile radio station signalling with a single fixed radio station at a time, the system further comprising at least one frequency channel serving as a control channel and time-shared between several fixed radio stations for the transmission of control signalling.

In certain mobile radio systems, one frequency channel is shared on a time basis between several fixed radio stations i.e. base stations which transmit on this control channel sequentially in turns. Such a system is used when the number of available radio channels is limited and the radio traffic is light. In a mobile radio system of this type, each mobile radio station, e.g. mobile telephone, responds only to the control signalling of the particular base station with which it is currently registered and signals back towards the system (exchange) only through this base station during the reception of the control signal. If, however, the signal strength of the current base station is no longer sufficient when received by the mobile radio station, the mobile radio station selects a new base station on the basis of the strength of the control signals it receives from the other base stations, and registers with the selected base station. In this kind of system, a time-shared control channel inevitably results in a situation where the set-up of calls between the mobile telephones and the network requires statistically more time as compared with system in which each base station has a dedicated control channel (the control channel is not time-shared). This is due to the fact that the base station may have more messages to be transmitted and received than what it is able to transmit or receive during the signalling period assigned to it.

DE-A-3130176 discloses a time division multiple access (TDMA) cellular system wherein equal length time slots are allocated to organisation channels and speech channels. Normally, at least one organisation channel is assigned to each radio cell. The assignment of the organisation channels can be dynamically controlled according to the traffic load, so that an extra organisation time slot can be assigned to an overloaded radio cell. This extra time slot is normally a time slot removed from another radio cell having a relatively low traffic load. The extra organisation time slot may also be a speech time slot (channel), if there are no free organisation time slots in the other radio cells. Thus, the signalling capacity in the overloaded cell is increased by increasing the number of the organisation channels in the overloaded cell.

US-A-4,763,322 discloses a TDMA system, wherein each mobile station is assigned by the base station to a respective time slot constituting a channel for receiving and transmitting information. So as to use the full channel capacity of the time frames for users having different bandwidth requirements, the base station divides each TDM frame into time slots of different durations according to the mobile station bandwidth requirements.

In accordance with the present invention, there is provided a radio system comprising several base stations positioned apart from each other within a coverage area of the radio system, and at least one mobile radio station signalling with a single base station at a time, the system further comprising at least one frequency channel serving as a control channel and time-shared between several base stations for the transmission of control signalling, and means for varying the length of a signalling period assigned to each fixed radio station on said control channel between minimum and maximum values specific for each particular radio station on the basis of the number of messages received by the base station and messages to be transmitted from said radio station, characterised in that, before each new signalling event during a signalling period, the means for varying the length of the signalling period:

increases the length of the signalling period between a preset minimum value and a preset first value, if there are queueing messages at the base station after duration of said minimum value of the length of the signalling period;

increases the length of the signalling period exceeding the preset first value by means of using a probability function in which the probability of increasing the length of the signalling period is dependent on the total number of the queueing messages at the base station and the length of the next signalling event; and

terminates the signalling period unconditionally before the time elapsed from the end of the preceding signalling period of the same base station exceeds a maximum allowed length of signalling period sequence of all of the base stations sharing said control channel.

In the system according to the invention, the length of the signalling period assigned to a particular base station can be varied in accordance with the amount of signalling forwarded through the base station. The signalling period can also be extended when the signalling is repeated due to an error occurred in the transfer and when (immediate) acknowledgement of the receipt of a transmitted message is expected from a mobile radio station. Decisions on the length of the assigned signalling period are preferably made during the signalling period in question, and the length of the signalling period is preferably controlled by using a probability function, in which the probability decreases with increasing length of the signalling period. The individual minimum and maximum values specific for the different base stations allow more signalling time to be assigned to base stations which have a greater traffic load than the others (e.g. densely populated areas).

In the following the invention will be described in greater detail by means of an illustrating embodiment with reference to the attached drawings, in which

Figure 1 shows a radio system in which the invention can be applied;

Figure 2 illustrates a connection between a mobile telephone exchange and a base station; and

Figure 3 is a block diagram illustrating the determination of the length of a burst to be transmitted in a control channel.

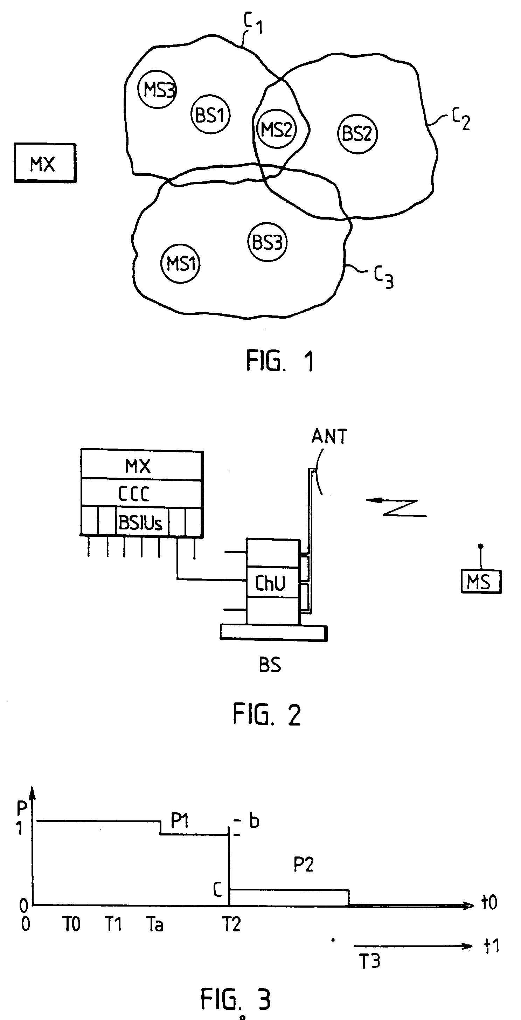

Figure 1 shows a mobile radio system in which the geographical area covered by the system is divided into smaller radio areas or radio cells C1, C2 and C3, preferably in such a way that the peripheral portions of adjacent cells overlap. Certain frequency channels are allocated to the cells for speech or data calls so that at least neighbouring cells utilize different frequencies at each specific moment. Each cell C1, C2 and C3 comprises at least one fixed multi-channel transceiver equipment BS1, BS2 and BS3, called a base station herein. All the base stations BS1, BS2 and BS3 are coupled by fixed connections, such as cables, to a mobile telephone exchange MX, which thus controls several base stations BS, and/or to a system controller CP, which controls the operation of the entire system.

For speech or data calls, the radio system uses predetermined radio frequencies or radio channels at which the base stations BS have radio links with mobile radio stations or mobile telephones MS moving within the cells. The mobile telephone exchange MX allocates these radio channels to the base stations separately for each call by a so-called dynamic allocation principle in such a way that one and the same frequency is not used simultaneously at adjacent base stations which might interfere with each other.

Figure 2 illustrates a connection between the mobile telephone exchange MX and a base station BS. The mobile telephone exchange MX contains several base station interface units BSIU each serving as a link between a call control computer CCC and a base station radio channel unit ChU. Each base station BS comprises several radio channel units ChU each comprising a radio transceiver. The call control computer CCC of the mobile telephone exchange MX allocates free radio channels, radio channel units ChU and base station interface units BSIU for each call in which one or more mobile telephones of the exchange participate. For each call, the mobile telephone exchange MX may force the channel unit ChU to operate on a desired predetermined radio channel for effecting the above-mentioned dynamic allocation.

The interface unit has four principal functions: it controls access to the associated radio channel; it converts and forwards messages between the radio

units, i.e. the channel units ChU and the call control computer CCC; it switches the transmission lines of the exchange to the radio channel; and it controls and monitors the operation of the base station. One BSIU controls one channel, which may be a traffic channel or a control channel utilized by the system for control signalling, such as call set-up signalling. In both cases, BSIU receives messages from the call control computer CCC, monitors the 4-wire speech and signalling connection between the exchange and the base station and transmits control data concerning the states of the transmitter, the base station and the transmission lines to the call control computer CCC.

When BSIU is connected to a traffic channel, it is either in an idle state or in a speech mode. In the idle state, BSIU waits for an allocation message from the call control computer CCC and monitors the transmission line to the base station BS. When BSIU is allocated for a call, it starts the transmitter of the base station BS and switches the transmission lines between the base station BS and the exchange in accordance with the type of call. During the call, BSIU transmits and receives call control messages and monitors the maintenance and releases the carrier data of the call in accordance with the call control messages from the radio link and the control from the call control computer CCC.

In the control channel mode, BSIU may serve as a dedicated control channel, as an undedicated control channel or as a time-shared control channel. The invention is applied in a case where several base stations BS1, BS2 and BS3 have a common frequency channel as a control channel, and they utilize this channel sequentially on a time-sharing basis for the transmission of their control messages or signalling bursts. One of the above-mentioned base station interface units BSIU is thereby permanently dedicated to the time-shared control channel and will be called TSCCIU (Time Shared Control Channel Interface Unit) in the text below.

The system may comprise several base station groups each having its own control channel. The signalling sequence on the control channel starts from a certain base station and terminates in a pause before the sequence is restarted with the signalling burst of the same base station. In the preferred embodiment of the invention, signalling bursts transmitted on the control channel comply with the MPT standard 1327 issued by the British Department of Trade and Industry. Thus each signalling burst is preceded by a pause during which none of the base stations BS transmits on the control channel. Each signalling burst contains a frame which begins with the fields LET, PREAMBLE and SYNC, as specified in the MPT standard 1327, chapter 3.3.3.1. Each signalling burst is also marked with the identifier of the transmitting base station.

One or more transceivers, i.e. mobile radio stations MS1, MS2 and MS3 roam freely within the area of the mobile telephone system. Each active mobile station MS must be registered with one of the base stations when it roams within the system. In this way the system keeps a register on the rough location of the mobile stations MS for the call set-up procedures. The mobile stations MS are allowed to roam freely from one cell C to another if only they register with the base station BS of the new cell C on transition. The mobile station MS is considered to be active in the cell C when the mobile station has selected the cell in accordance with a predetermined procedure, the base station BS of the cell has transmitted a signalling burst and the mobile station MS has received the identifier of the base station.

The mobile station MS is able to transmit signalling messages only when the base station BS of the cell C in which the mobile station is active is signalling simultaneously on the control channel. Such messages transmitted by the mobile station MS are e.g. acknowledgements to messages from the base stations BS and so-called random access messages which the mobile stations MS may.transmit only after receiving an ALOHA message from the base station BS. The length of each different signalling burst during the assigned signalling period of the base station BS on the control channel can be varied dynamically on the basis of the number of inbound and outbound messages at the base station BS between individual minimum and maximum values given to each base station BS. The total length of the burst sequence may thereby also vary.

The signalling load may vary significantly on the time-shared control channel from one base station to another. Therefore it is necessary to allow a more heavily loaded base station to use more control channel capacity (time) so as to keep the call set-up times within reasonable limits. This is achieved by allowing the base station to increase the length of its signalling burst during a peak loading period. The maximum length of a burst has to be controlled in such a way that the total burst sequence is kept within specified limits.

During a burst, TSCCIU determines before each signalling procedure whether it is able (if required) to add more time slots to the burst or not. On making this decision, at least the minimum and maximum length of the signalling burst, the maximum burst sequence (time between two subsequent bursts of the same base station) and the distribution of loading between the base stations have to be taken into account.

On determining the burst length, BSIU may use the following timing limits, which are illustrated in the timing diagram of Figure 3.

During very light traffic and in idle state, the burst length of the base station is T0 or T1 according to the parameter m.

T0 is the shortest burst length in the idle state. T0 consists of messages LET, PREAMBLE, SYNC, MARK, ALH(2) frame, and a burst terminating message BT (Burst Terminator). The minimum burst is the starting sequence and four time slots, altogether about 500 ms. A burst of this type can be used if no inbound signalling has been received at the base station during the last m burst sequences (T0 and m are parameters specific for each base station).

T1 is the shortest burst length allowable for the base station otherwise than in the idle state. T1 is set separately for each base station and it contains an ALH frame having a length of at least two time slots. If the time T1 has not been exceeded, the next signalling event is carried out. If there are no messages waiting for transmission, an empty ALH frame is transmitted.

With increasing traffic, the burst can be extended. The required number of time slots to be added is calculated at the beginning of each signalling event. After T1 the length of the burst can be increased, if required, up to Ta if there are signalling events present at the base station (messages waiting for transmission). Ta is a parameter which is set individually for each base station.

The need to increase the length of the burst from Ta onwards has to be assessed by utilizing statistic probability, whereby the used probability function depends on whether the length of the burst exceeds T2, which is the average burst length during maximum loading. T2 is a dynamically variable parameter specific for each base station, and it is calculated on the basis of the permissible duration of the burst sequence (e.g. 5 s) and the distribution of loading between the base stations. If T2 has not been exceeded, the probability of adding the required time slots to the current burst is P1. If T2 has been exceeded, the probability is P2.

T3 is the maximum permissible duration of the burst sequence, e.g. 10 to 20 s. T3 must be measured from the end of a preceding burst of the same base station. If the time period T3 would otherwise be exceeded, the burst is terminated immediately by the message BT during the signalling event.

The distribution of the burst length is controlled by the parameters T2, Ta, P1 and P2. The parameters T2 and Ta can be given in advance for each base station on the basis of an estimated traffic distribution, or they can be calculated dynamically on the basis of the loading conditions of the base stations.

Queueing messages are given a weight coefficient on the basis of the effect they have on the additional signalling. The sum of the weight coefficients of the queueing messages S and the length L1 of the next signalling event (in time slots, $L1 \leqq 16$) are used when calculating the probabilities P1 and P2 according to the following equations.

$$P1(L1,S) = (1 - L1/17)^{0.8} * (S/30)^{0.1} \quad (1)$$
$$P2(L1,S) = (1 - L1/17)^{0.8} * (S/30)^{0.8} \quad (2)$$

The calculated values P1 and P2 may be placed in search tables addressed by the indices L1 and S.

As for the mobile telephone MS, the control channel signallings mentioned above naturally occur only when the mobile telephone has no call and it listens to the control channel.

The drawings and the description related to them are only intended to illustrate the present invention. In its details, the radio system according to the invention may vary within the scope of the attached claims.

## Claims

1. A radio system comprising several base stations (BS1, BS2, BS3) positioned apart from each other within a coverage area of the radio system, and at least one mobile radio station (MS1, MS2, MS3) signalling with a single base station at a time, the system further comprising at least one frequency channel serving as a control channel and time-shared between several base stations for the transmission of control signalling, and means (BS1U) for varying the length of a signalling period assigned to each base station (BS1, BS2, BS3) on said control channel between minimum and maximum values specific for each particular radio station on the basis of the number of messages received by the base station and messages to be transmitted from said radio station, characterised in that, before each new signalling event during a signalling period, the means (BS1U) for varying the length of the signalling period:

  increases the length of the signalling period between a preset minimum value (T0,T1) and a preset first value (Ta), if there are queueing messages at the base station after duration of said minimum value (T0,T1) of the length of the signalling period;

  increases the length of the signalling period exceeding the preset first value (Ta) by means of using a probability function in which the probability (P1,P2) of increasing the length of the signalling period is dependent on the total number of the queueing messages at the base station and the length (L1) of the next signalling event; and

  terminates the signalling period- unconditionally before the time elapsed from the end of the preceding signalling period of the same base station exceeds a maximum allowed length (T3) of signalling period sequence of all of the base stations sharing said control channel.

2. A radio system according to claim 1, wherein the probability (P1,P2) of increasing the length of the signalling period is dependent on the current length of the signalling period in the range exceeding the preset first value (Ta).

3. A radio system according to claim 1 or 2, wherein the control means comprises

  a first probability function for increasing the length of the signalling period from a value between the preset first value (Ta) and a second preset value (T2),

  a second probability function for increasing the length of the signalling period from a value exceeding the second preset value (T2) the second probability function resulting in a lower probability (P2) than that (P1) of the first probability function.

4. A radio system according to claim 3, wherein the second preset value (T2) is an average length of a signalling period during a maximum signalling load at the base station.

## Patentansprüche

1. Funksystem mit mehreren Basisstationen (BS1, BS2, BS3), welche innerhalb eines Versorgungsbereichs des Funksystems gegeneinander beabstandet angeordnet sind, und mit wenigstens einer beweglichen Funkstation (MS1, MS2, MS3), welche zu einer Zeit mit einer einzelnen Basisstation Signale austauscht, wobei das System weiter wenigstens einen Frequenzkanal aufweist, der als Steuerkanal dient und zeitlich zwischen den einzelnen Basisstationen zum Steuerzeichenaustausch aufgeteilt ist, und mit einer Einrichtung (BS1U) zur Veränderung der Länge des Signalaustauschzeitintervalls, welches jeder Basisstation (BS1, BS2, BS3) innerhalb des Steuerkanals zugewiesen ist, zwischen minimalen und maximalen Werten, welche für jede einzelne Funkstation spezifisch sind auf Grundlage der Anzahl der von der Basisstation empfangenen Botschaften und den von der Funkstation zu übertragenden Botschaften, **dadurch gekennzeichnet**, daß vor jedem neuen Signalaustauschereignis während eines Signalaustauschzeitintervalls die Einrichtung (BS1U) zum Verändern der Länge des Signalaustauschzeitintervalls:

  - die Länge des Signalaustauschzeitintervalls zwischen einem vorbestimmten minimalen Wert (T0, T1) und einem vorbestimmten ersten Wert (Ta) erhöht, wenn an der Basisstation sich aufstauende Botschaften nach Ablauf des Minimumwertes (T0, T1) der Länge des Signalzeitintervalls vorliegen;

  - die Länge des Signalaustauschzeitintervalls, welche den ersten vorbestimmten Wert (Ta) überschreitet unter Verwendung einer Wahrscheinlichkeitsfunktion erhöht, in der die Wahrscheinlichkeit (P1, P2) zur Erhöhung der Länge des Zeichenaustauschzeitintervalls von der Gesamtzahl der sich an der Basisstation aufstauenden Botschaften und der Länge (L1) des nächsten Signalaustauschereignisses abhängt; und

- das Zeichenaustauschzeitintervall bedingungslos beendet bevor die Zeit, die seit dem Ende des vorhergehenden Zeichenaustauschzeitintervalls derselben Basisstation verstrichen ist, eine maximal zulässige Länge T3 in der Zeichenaustausch-Zeitintervallsequenz von allen Basisstationen, die sich den Steuerkanal teilen, überschreitet.

2. Funksystem nach Anspruch 1, indem die Wahrscheinlichkeit (P1, P2) zur Erhöhung der Länge der Zeichenaustauschzeitintervalls abhängt von der gegenwärtigen Länge des Zeichenaustauschzeitintervalls in dem Bereich, in dem der vorbestimmte erste Wert (Ta) überschritten wird.

3. Funksystem nach Anspruch 1 oder 2, in dem die Steuereinrichtung umfaßt:
eine erste Wahrscheinlichkeitsfunktion zum Erhöhen der Länge des Zeichenaustauschzeitintervalls von einem ersten Wert zwischen dem ersten vorbestimmten Wert (Ta) und einem zweiten vorbestimmten Wert (T2),
eine zweite Wahrscheinlichkeitsfunktion zum Erhöhen der Länge des Zeichenaustauschintervalls von einem ersten Wert, der den zweiten vorbestimmten Wert (T2) überschreitet, wobei die zweite Wahrscheinlichkeitsfunktion eine geringere Wahrscheinlichkeit (P2) im Vergleich zu derjenigen (P1) der ersten Wahrscheinlichkeitsfunktion ergibt.

4. Funksystem nach Anspruch 3, in dem der zweite vorbestimmte Wert (T2) eine gemittelte Länge eines Zeichenaustauschzeitintervalls während einer maximalen Zeichenaustauschbelastung an der Basisstation ist.

**Revendications**

1. Système radio comprenant plusieurs stations de base (BS1, BS2, BS3) espacées entre elles à l'intérieur d'une région de couverture du système radio, et au moins une station radio mobile (MS1, MS2, MS3) qui échange des signaux avec une seule station de base à la fois, le système comprenant en outre au moins un canal de fréquence qui sert de canal de commande et est partagé dans le temps entre plusieurs stations de base pour émettre des signaux de commande, ainsi que des moyens (BS1U) pour faire varier la durée de la période de signalisation attribuée à chaque station de base (BS1, BS2, BS3) sur ledit canal de commande entre des valeurs minimum et maximum particulières à chaque station radio donnée, sur la base du nombre de messages reçus par la station de base et des messages à émettre par ladite station radio,
caractérisé en ce que, avant chaque nouvel évènement de signalisation au cours d'une période de signalisation, les moyens (BS1U) pour faire varier la durée de la période de signalisation :

- augmentent la durée de la période de signalisation entre une valeur minimum prédéterminée (T0, T1) et une première valeur prédéterminée (Ta) s'il y a des messages en attente dans une queue à la station de base après l'écoulement de ladite durée minimum (T0, T1) de la période de signalisation ;
- augmentent la durée de la période de signalisation qui dépasse la première valeur prédéterminée (Ta) en utilisant une fonction de probabilité où la probabilité (P1, P2) d'augmentation de la durée de la période de signalisation dépend du nombre total de messages qui font la queue à la station de base et de la durée (L1) du prochain événement de signalisation ; et
- terminent systématiquement la période de signalisation avant que le temps écoulé à partir de la fin de la période de signalisation précédente de la même station de base dépasse une durée maximum permise (T3) de séquence de période de signalisation de toutes les stations de base qui partagent le canal de commande.

2. Système radio selon la revendication 1, dans lequel la probabilité (P1, P2) d'augmentation de la durée de la période de signalisation dépend de la durée instantanée de la période de signalisation située dans la fourchette qui dépasse la valeur prédéterminée (Ta).

3. Système radio selon la revendication 1 ou 2, dans lequel les moyens de commande comprennent :

- une première fonction de probabilité pour augmenter la durée de la période de signalisation à partir d'une valeur située entre la première valeur prédéterminée (Ta) et une deuxième valeur prédéterminée (T2) ;
- une deuxième fonction de probabilité pour augmenter la durée de la période de signalisation à partir d'une valeur qui dépasse la deuxième valeur prédéterminée (T2), la deuxième fonction de probabilité ayant pour résultat une probabilité moindre (P2) que celle (P1) de la première fonction de probabilité.

4. Système radio selon la revendication 3, dans lequel la deuxième valeur prédéterminée (T2) est une durée moyenne de période de signalisation au cours d'une charge maximum de signalisation de la station de base.

FIG. 1

FIG. 2

FIG. 3

8